# NEUE EUROPÄISCHE PATENTSCHRIFT

(11) **EP 4 007 686 B2**
(45) Veröffentlichungstag und Bekanntmachung des Hinweises auf die Entscheidung über den Einspruch: **04.03.2026**
(45) Hinweis auf die Patenterteilung: 06.09.2023
(21) Anmeldenummer: 20767948.1
(22) Anmeldetag: 30.07.2020
(51) Int. Cl.: B29C 41/28, F16G 1/20, B29D 29/00

(54) **VERFAHREN ZUR HERSTELLUNG EINES ENDLOSBANDES**
METHOD FOR PRODUCING A CONTINUOUS BELT
PROCÉDÉ DE FABRICATION D'UNE BANDE CONTINUE

(30) Priorität: 01.08.2019 AT 506952019
(43) Veröffentlichungstag der Anmeldung: 08.06.2022
(73) Patentinhaber: Berndorf Aktiengesellschaft, 2560 Berndorf (AT)
(72) Erfinder: HAYDN, Markus, 2353 Guntramsdorf (AT); STÜCKLER, Thomas, 2630 Ternitz (AT); SÜALP, Pelin, 1200 Wien (AT); SZIGETHI, Richard, 7201 Neudörfl (AT)
(74) Vertreter: Burger, Hannes
(86) Internationale Anmeldenummer: PCT/AT2020/060284
(87) Internationale Veröffentlichungsnummer: WO 2021/016647

(56) Entgegenhaltungen:
- EP-A1- 0 576 115
- EP-A1- 1 164 094
- EP-A1- 1 532 198
- EP-A1- 2 902 545
- EP-B1- 1 877 620
- WO-A1-2012/143246
- WO-A1-2013/020745
- WO-A1-2016/123645
- WO-A2-03/078859
- DE-A1- 102006 040 056
- DE-A1- 19 702 138
- DE-A1- 4 411 620
- GB-A- 594 052
- JP-A- 2009 069 122
- US-A- 4 342 809
- US-A- 5 681 612

## Beschreibung

Die Erfindung betrifft ein Verfahren zur Herstellung eines Endlosbandes gemäß dem Oberbegriff von Anspruch 1.

Weiters betrifft die Erfindung ein Endlosband gemäß dem Oberbegriff von Anspruch 10.

Verfahren und Endlosbänder der eingangs genannten Art sind aus der WO2016/123645 A1 und der EP 1164094 A1 bekannt geworden.

Bänder für Fahrzeugprüfstände, Windkanäle und dergleichen, weisen oft Oberflächenbeläge bzw. Beschichtungen auf, die in einer Dauerbelastung zu einer Rissbildung neigen können, da es sich hierbei oftmals um aufgeklebte Folien handelt.

Es ist daher eine Aufgabe der Erfindung, die Nachteile der bekannten Lösungen zu überwinden und ein Endlosband insbesondere für den Einsatz in Fahrzeugprüfständen und Windkanälen zu schaffen, welches einen mechanisch sehr strapazierfähigen Belag aufweist, der auch unter Dauerbelastungen nicht bricht oder reißt oder sich von dem Endlosband löst.

Diese Aufgabe wird mit einem Verfahren der eingangsgenannten Art erfindungsgemäß durch die Merkmale des kennzeichnenden Teils von Anspruch 1 gelöst. Mit der erfindungsgemäßen Lösung lässt sich sehr zuverlässig ein Reißen, Brechen oder Ablösen der Beschichtung auch bei sehr kleinen Biegeradien des Endlosbandes und bei Dauerbelastungen verhindern. Zudem werden Festigkeit, Beständigkeit und Langzeitperformance des Belags wesentlich verbessert. Bei der Erfindung kann zum einen ein Belag mit einer gemittelten Rauheit, insbesondere einer gemittelten Rautiefe, und/oder einer gemittelten Oberflächenbeschaffenheit und/oder Struktur erzielt werden, wie sie einem gemittelten Straßenbelag entspricht bzw. entsprechen oder zumindest ein Belag realisiert werden, der sich einem Straßenbelag optisch und/oder hinsichtlich der Rutschhemmung annähert, zum anderen kann der Belag direkt auf die Oberfläche des Bandkörpers aufgetragen und eine sehr gute Haftung zwischen Belag und Bandkörper erzielt werden, ohne dass hierbei zusätzlich eine Haftvermittlerschicht erforderlich wäre. Weiters erfüllt der aufgebrachte Belag eine Schutzfunktion für den Bandkörper, insbesondere hinsichtlich Stoß-, Schlag- und Scherkräften sowie gegen Korrosion.

Als besonders vorteilhaft hat sich herausgestellt, dass als Bewährungselemente Fasern, insbesondere mineralische Fasern, wie Kohlenstofffasern und/oder Borfasern, und/oder Kunststofffasern und/oder Glasfasern, wie Nylonfasern (z.B. Polyamid), und/oder Metallfasern und/oder Fasern auf Basis von natürlichen Rohstoffen, wie Zellulose und/oder Hanf und/oder Baumwolle und/oder Sisal und/oder Jute und/oder Flachs und/oder Naturfasern (Samenfasern, Bastfasern, Hartfasern, Kokos, Binsengräser, Bambus etc.) und/oder Holzfasern und/oder Wolle und/oder Tierhaare und/oder Seide, und/oder Nadeln, insbesondere Metallnadeln, verwendet werden.

Die Bewährungselemente können zumindest eine Fernordnung, beispielsweise in Form eines Netzes, Gitters oder Gewebes, wie beispielsweise eines Armierungsgewebes, insbesondere in Form eines Biaxial-Glasgewebes, oder in Form eines Glasfasergeleges oder Kohlefasergeleges, bilden oder statistisch in dem Grundmaterial, beispielsweise in Form von Baumwollflocken, Glasfaserschnitzel, Kohlefaserschnitzel, in dem Grundmaterial verteilt werden.

Als besonders günstig hinsichtlich der Beständigkeit des Belags unter Dauerbelastung hat sich herausgestellt, dass die Bewährungselemente je ein Verhältnis von Länge zu Durchmesser von mindestens 3:1, insbesondere von mindestens 5:1, bevorzugt von mindestens 7:1, besonders bevorzugt von mindestens 8:1 aufweisen.

Weiters hat sich eine Weiterbildung der Erfindung als besonders vorteilhaft erwiesen, gemäß welcher ein Anteil der Bewährungselemente zwischen 10 und 45 Gewichtsprozent, insbesondere zwischen 20 und 35 Gewichtsprozent, des Grundmaterials oder der Beschichtung beträgt.

Das die Matrix für die Hartpartikel bildende Grundmaterial kann lösungsmittelbasiert sein, so kann als Lösungsmittel beispielsweise ein Kohlenwasserstoffgemisch verwendet werden. Besonders vorteilhaft ist es, wenn die Matrix im Vergleich zum Bandmaterial eine ausreichende Flexibilität gewährleistet, wie dies von vielen Kunststoffen, insbesondere von thermoplastischen Kunststoffen gewährleistet wird. Herstellungsbedingt kann die Matrix auch noch andere Stoffe aufweisen, wobei nach Verdunsten des Lösungsmittels der überwiegende Teil der Matrix aus Polymeren besteht.

Als Hartpartikel können bevorzugt organische Partikel, insbesondere Weizengrieß, Partikel aus Nussschalen, Reis oder Partikel aus gebrochenen Kirschenkernen, und/oder anorganische Partikel, insbesondere ausgewählt aus der Gruppe, Korund (Al2O3), Rubin, Saphir, Quarz (SiO2), Topas (Al2[(F,OH)2|SiO4]), Siliciumcarbid (SiC), Diamant (C), Bornitrid (BN), Aggregierte Diamant-Nanostäbchen (ADNR), ZrO2 und alle möglichen Dotierungen von ZrO2, insbesondere 8YSZ und 3 YSZ, Sand, TiO2, Metall- oder Keramikpulver und anorganische Agglomerate, verwendet werden.

Der Bandkörper des Endlosbandes kann hierbei aus einem Metallblech gefertigt sein, dessen Stirnkanten miteinander verschweißt sind, sodass ein geschlossener Ring gebildet ist. Der Bandkörper kann jedoch auch aus einem Metallblech bestehen dessen Längskanten schraubenlinienförmig angeordnet sind und eine schraubenförmige Längsscheißnaht aufweisen, wie dies beispielsweise aus der US3728066A bekannt geworden ist. Alternativ zur Verwendung von nur einem einzigen Metallblech zur Herstellung des Bandkörpers können auch mehrere miteinander verschweißte Metallbleche zum Einsatz kommen. So kann der Bandkörper aus zwei oder mehreren Metallblechen gebildet sein, deren Längskanten und Stirnkanten miteinander verschweißt sind, sodass ein geschlossener Ring beliebiger Breite und Länge hergestellt werden kann, wie dies beispielsweise aus der AT514722B1 bekannt geworden ist.

Das Grundmaterial kann, bevorzugt gemeinsam mit den Bewährungselementen und den Hartpartikeln, beispielsweise auch durch Spritzen, Walzen, Spachteln, Pinseln, und ähnliche Verfahren auf die Bandoberfläche aufgebracht werden.

Das Obertrum des Endlosbandes umfasst einen oberen zwischen den beiden Umlenkrollen befindlichen sowie einen oberen auf den Umlenkrollen aufliegenden Abschnitt des Endlosbandes. Der untere dem Obertrum gegenüberliegende Teil des Endlosbandes wird als Untertrum bezeichnet.

Als besonders vorteilhaft hinsichtlich der Effizienz des Aufbringens der Beschichtung hat sich eine Variante der Erfindung erwiesen, bei welcher die Hartpartikel in das die Matrix für die Hartpartikel bildende Grundmaterial und die Bewährungselemente vor einem Auftragen auf die erste Hauptoberfläche des Bandkörpers eingemischt werden.

Als besonders geeignet zur Realisierung der Erfindung haben sich Hartpartikel mit einer Korngröße zwischen 0,01 und 3 mm bevorzugt zwischen 0,05 bis 2 mm, besonders bevorzugt zwischen 0,1 bis 1 mm, erwiesen. Die hier angeführten Werte repräsentieren einen Mittelwert der Partikelgröße.

Die oben genannte Aufgabe lässt sich auch mit einem Endlosband der eingangsgenannten Art erfindungsgemäß die Merkmale des kennzeichnenden Teils von Anspruch 10 durch lösen.

Günstiger Weise sind die Bewährungselemente als Fasern, insbesondere mineralische Fasern, wie Kohlenstofffasern und/oder Borfasern und/oder Glasfasern, und/oder Kunststofffasern, wie Nylonfasern (z.B. Polyamid), und/oder Metallfasern und/oder Fasern auf Basis von natürlichen Rohstoffen, wie Zellulose und/oder Hanf und/oder Baumwolle und/oder Sisal und/oder Jute und/oder Flachs, und/oder Naturfasern und/oder Holzfasern und/oder Wolle und/oder Tierhaare und/oder Seide, und/oder als Nadeln, insbesondere Metallnadeln, ausgebildet.

Als vorteilhaft hat sich erwiesen, dass die Bewährungselemente zumindest eine Fernordnung, beispielsweise in Form eines Netzes, Gitters oder Gewebes, wie beispielsweise eines Armierungsgewebes, insbesondere in Form eines Biaxial-Glasgewebes, oder in Form eines Glasfasergeleges oder Kohlefasergeleges, bilden oder statistisch in dem Grundmaterial verteilt sind, beispielsweise in Form von Baumwollflocken, Glasfaserschnitzel, Kohlefaserschnitzel.

Gemäß einer besonders bevorzugten Ausführungsform der Erfindung kann es vorgesehen sein, dass die Bewährungselemente je ein Verhältnis von Länge zu Durchmesser von mindestens 3:1, insbesondere von mindestens 5:1, bevorzugt von mindestens 7:1, besonders bevorzugt von mindestens 8:1 aufweisen.

Bevorzugt beträgt ein Anteil der Bewährungselemente zwischen 10 und 45 Gewichtsprozent, insbesondere zwischen 20 und 35 Gewichtsprozent, des Grundmaterials oder der Beschichtung.

Als besonders vorteilhaft hat sich eine Variante erwiesen, bei welcher die Hartpartikel organische Parti-kel, insbesondere Weizengrieß, Partikel aus Nussschalen, Reis oder Partikel aus gebrochenen Kirschenkernen, und/oder anorganische Partikel, insbesondere ausgewählt aus der Gruppe, Korund (Al2O3), Rubin, Saphir, Quarz (SiO2), Topas (Al2[(F,OH)2|SiO4]), Siliciumcarbid (SiC), Diamant (C), Bornitrid (BN), Aggregierte Diamant-Nanostäbchen (ADNR), ZrO2 und alle möglichen Dotierungen von ZrO2, insbesondere 8YSZ und 3 YSZ, Sand, TiO2, Metall- oder Keramikpulver und anorganische Agglomerate, sind.

Bevorzugt weisen die Hartpartikel eine Korngröße zwischen 0,01 und 3 mm, bevorzugt zwischen 0,05 bis 2 mm, besonders bevorzugt zwischen 0,1 bis 1 mm auf.

Zudem hat es sich als besonders vorteilhaft erweisen, wenn eine Oberfläche der Beschichtung 1 bis 10000, bevorzugt 1 bis 1000, besonders bevorzugt 10 bis 1000, Hartpartikel pro cm² aufweist.

Eine besonders gut für Anwendungen in Fahrzeugprüfständen, Windkanälen und dergleichen geeignete Weiterbildung der Erfindung sieht vor, dass die Beschichtung in einem trockenen und in einem nassen Oberflächenzustand eine Rutschhemmung von R13 gemäß DIN-51130 aufweist.

Als besonders vorteilhaft bezüglich Haftung auf dem Bandkörper und Realisierung einer guten Simulation von Straßenverhältnissen hat sich erwiesen, dass die Beschichtung eine Schichtdicke zwischen 0,1 und 5 mm, insbesondere zwischen 0,5 und 1,5 mm aufweist.

Zudem hat es sich als besonders vorteilhaft erwiesen, dass die Beschichtung eine mittlere Rautiefe von mehr als 100 µm, bevorzugt von mehr als 300 µm, besonders bevorzugt von mehr als 500 µm aufweist.

Eine Ausführungsform der Erfindung, die besonders für den Einsatz als Radantriebsband in Fahrprüfständen oder in Windkanälen und dergleichen geeignet ist, sieht vor, dass das Endlosband eine Umfangslänge zwischen 0,2 und 30 m, insbesondere zwischen 1 und 25 m, und eine Dicke zwischen 0,1 und 4 mm, insbesondere zwischen 0,2 und 2,5 mm und eine Breite zwischen 0,1 und 10 m, insbesondere zwischen 0,2 und 3,2 m, aufweist.

Die Dauerbelastbarkeit der Beschichtung lässt sich dadurch wesentlich erhöhen, dass die Beschichtung stoßfrei ist. Bei dieser Variante der Erfindung weist die Beschichtung keine erkennbaren Anfangs- und Endstellen auf, wie diese beispielsweise bei Verwendung einer Folie der Fall wäre, sondern geht ohne Unstetigkeitsstelle in sich selbst über.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines erfindungsgemäßen Endlosbandes;
- Fig. 2: einen Schnitt entlang der Linie II-II in Fig.1 und
- Fig. 3: eine Darstellung des erfindungsgemäßen Herstellungsverfahrens.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Zudem sei darauf hingewiesen, dass die Ausführungsbeispiele Figuren übergreifend beschrieben sind.

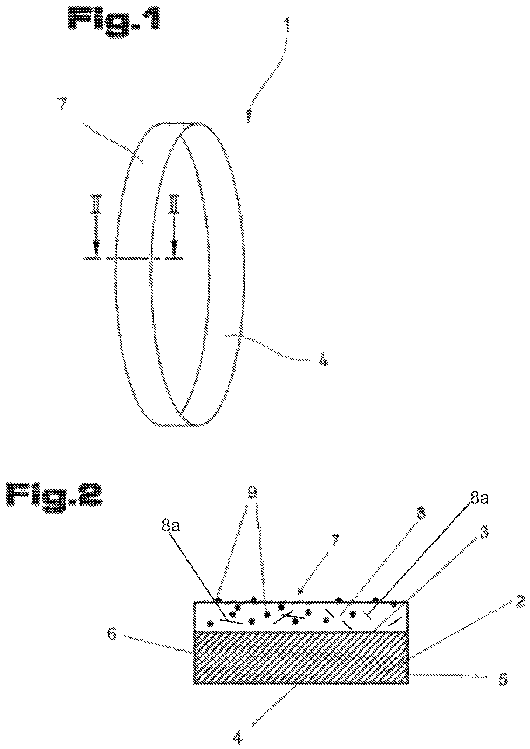

Gemäß Fig. 1 und 2 weist ein erfindungsgemäßes Endlosband 1 einen Bandkörper 2 mit einer ersten Hauptoberfläche 3 und eine zweite Hauptoberfläche 4 auf. Die erste Hauptoberfläche 3 und die zweite Hauptoberfläche 4 des Bandkörpers 2 sind über Seitenkanten 5, 6 miteinander verbunden. Die Innenseite des Endlosbandes 1 kann durch die zweite Hauptoberfläche 4 gebildet sein. Auf die der Innenseite des Endlosbandes 1 gegenüberliegende Hauptoberfläche 3 des Bandkörpers 2 ist eine Beschichtung 7 aufgebracht.

Die Beschichtung 7 bildet eine Außenseite des Endlosbandes 1 und weist ein Grundmaterial 8 auf, in welches in welches Bewährungselemente 8a eingebracht sind. Die Bewährungselemente 8a können als Fasern, insbesondere mineralische Fasern, insbesondere Glasfasern, Carbon- und/oder Kunststofffasern und/oder Metallfasern und/oder Fasern auf Basis von natürlichen Rohstoffen, wie Zellulose und/oder Hanf, und/oder Nadeln, insbesondere Metallnadeln, ausgebildet sein. Die Fasern können beispielsweise auch aus Borfasern, und/oder Glas, und/oder Nylon (z.B. Polyamid) und/oder Baumwolle, und/oder Sisal, und/oder Hanf, und/oder Jute, und/oder Flachs, und/oder Naturfasern (Samenfasern, Bastfasern, Hartfasern, Kokos, Binsengräser, Bambus etc.) und/oder Holzfasern und/oder Wolle und/oder Tierhaare und/oder Seide gebildet sein,

Zudem können die Bewährungselemente 8a zumindest eine Fernordnung, beispielsweise in Form eines Netzes, Gitters, beispielsweise eines Drahtgitters, oder Gewebes, wie beispielsweise eines Armierungsgewebes, insbesondere in Form eines Biaxial-Glasgewebes, oder in Form eines Glasfasergeleges oder Kohlefasergeleges, bilden.

Im Falle von Gittern, Geweben oder Netzen weisen diese bevorzugt eine Maschenweite von 0,1 mm x 0,1 mm bis 10 mm x 10 mm auf, wobei die ausgebildeten Maschen nicht zwingend rechteckig/quadratisch ausgeführt sein müssen, so können die Maschen grundsätzlich jede mögliche Form aufweisen, z.B. rauten- deltoid-, parallelogrammförmig, etc. Im Falle eines Gewebes können die Längs- bzw. Querfasern aus dem gleichen oder aus unterschiedlichen Materialen bestehen und sowohl von gleicher oder unterschiedlicher Dicke sein.

Weiters können die Bewährungselemente 8a statistisch in dem Grundmaterial 8 bzw. der Beschichtung 7 verteilt sein, beispielsweise in Form von Baumwollflocken, Glasfaserschnitzel, Kohlefaserschnitzel, Fasern oder Nadeln.

Im Falle eines Netzes, Gewebes, wie beispielsweise eines Armierungsgewebes, oder Gitters stellen die einzelnen miteinander verbundenen Quer- bzw. Längsfasern oder Quer- bzw. Längsstäbe die Bewährungselemente 8a dar.

Weiters können die Bewährungselemente 8a je ein Verhältnis von Länge zu Durchmesser von mindestens 3:1, insbesondere von mindestens 5:1, bevorzugt von mindestens 7:1, besonders bevorzugt von mindestens 8:1 aufweisen.

Ein Anteil der Bewährungselemente 8a kann zwischen 10 und 45 Gewichtsprozent, insbesondere zwischen 20 und 35 Gewichtsprozent, des Grundmaterials 8 oder der Beschichtung 7 betragen.

Das Grundmaterial 8 bildet eine Matrix, in welche Hartpartikel 9 eingebettet sind auf. Die Hartpartikel 9 sind aus einem Material, welches eine Härte gemessen nach Vickers von über 500 [HV], insbesondere eine Härte zwischen 1400 [HV] und 10060 [HV] aufweisen kann. Die in diesem Dokument angegebenen Vickers-Härtewerte beziehen sich auf eine Vickers-Härteprüfung mit einer Prüfkraft ≥ 49,03 N, insbesondere 49,03 N. Anders gesagt, sind die Hartpartikel aus einem Material, welches bevorzugt eine Mohs Härte von über 5, insbesondere zwischen 6 und 10 aufweist. Die Angabe in Mohs Härte stellt hierbei eine Alternative zu der Angabe der Vickers-Härte dar.

Die Beschichtung 7 ist direkt auf der ersten Hauptoberfläche 3 des Bandkörpers 2 aufgebracht. Der Bandkörper 2 ist vorteilhafterweise aus Metall, insbesondere aus Stahl gefertigt.

Die Beschichtung 7 kann beispielsweise eine Schichtdicke zwischen 0,2 und 2 mm, insbesondere zwischen 0,5 und 1,5 mm und eine mittlere Rautiefe von mehr als 100 µm, bevorzugt von mehr als 300 µm, besonders bevorzugt von mehr als 500 µm aufweisen. Zudem kann die Beschichtung 7 stoßfrei und weitgehend homogen ausgebildet sein.

Das Endlosband 1 kann eine Umfangslänge zwischen 0,2 und 30 m, insbesondere zwischen 1 und 25 m und eine Dicke zwischen 0,1 und 4 mm, insbesondere zwischen 0,2 und 1,2 mm und eine Breite zwischen 0,1 und 10 m, insbesondere zwischen 0,2 und 3,2 m, aufweisen.

Das Grundmaterial 8 ist aus einem Polymer oder einer Mischung von Polymeren gebildet. Bevorzugt ist das zum Einsatz kommende Polymer oder Polymergemisch ausgewählt aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK) Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT) , Polyethylenterephthalat (PET), Polyamid (PA), Polycarbonat (PC), Cycloolefincopolymere (COC), Polyoximethylen (POM), Acrylnitril-butadien-styrol (ABS), Polyvinylcarbonat (PVC), Ethylentetrafluorethylen (ETFE), Polytetrafluorethylen (PTFE), Polyvinylfluorid (PVF), Polyvinylidenfluorid (PVDF) und/oder Ethylen-Tetrafluorethylen-Hexafluorpropylen-Fluorterpolymer (EFEP). Besonders bevorzugt ist das Grundmaterial 8 aus einem thermoplastischen Polymer gebildet, wobei jedoch grundsätzlich auch duroplastische oder elastomere Polymere verwendet werden können, um die aus dem Grundmaterial 8 gebildete Matrix zu realisieren.

Die Hartpartikel 9 können durch organische Partikel, insbesondere Weizengrieß, Partikel aus Nussschalen, Reis oder Partikel aus gebrochenen Kirschenkernen, und/oder anorganische Partikel, insbesondere ausgewählt aus der Gruppe, Korund (Al2O3), Rubin, Saphir, Quarz (SiO2), Topas (Al2[(F,OH)2|SiO4]), Siliciumcarbid (SiC), Diamant (C), Bornitrid (BN), Aggregierte Diamant-Nanostäbchen (ADNR), ZrO2 und alle möglichen Dotierungen von ZrO2, insbesondere 8YSZ und 3 YSZ, Sand, TiO2, Metall- oder Keramikpulver und anorganische Agglomerate, gebildet sein.

Eine mittlere Korngröße der Hartpartikel 9 beträgt bevorzugt zwischen 0,01 und 3 mm bevorzugt zwischen 0,05 bis 2 mm, besonders bevorzugt zwischen 0,1 bis 1 mm. Die Hartpartikel 9 können als Einzelpartikel vorliegen oder, wie es bei feineren Korngrößen oft der Fall ist, in Form von Agglomeraten. Die einzelnen Partikel können ähnlich sein und eine reguläre geometrische Form aufweisen - beispielsweise kugelförmig oder zylinderförmig. Die einzelnen Partikel können aber auch unregelmäßig Form haben und keine Ähnlichkeit aufweisen. Hier sei beispielhaft die Herstellung von Pulvern über Brechen und Mahlen angeführt, wie sie häufig bei keramischen Partikeln Anwendung findet. Derartig hergestellte Pulver haben eine weite Partikelgrößenverteilung welche statistisch verteilt ist, wobei der d50 Parameter als Mittelwert der Partikelgröße herangezogen wird. Der mittlere Durchmesser d50 derartiger Hartpartikel 9 liegt zwischen 0,01 bis 3 mm, bevorzugt zwischen 0,05 bis 2 mm, und besonders bevorzugt zwischen 0,1 bis 1 mm. Eine Oberfläche der Beschichtung 7 kann beispielsweise 1 bis 10000, bevorzugt 1 bis 1000, besonders bevorzugt 10 bis 1000, Hartpartikel pro cm² aufweisen. In einem trockenen und in einem nassen Oberflächenzustand weist die Beschichtung 7 bevorzugt eine Rutschhemmung von R13 gemäß DIN-51130 auf.

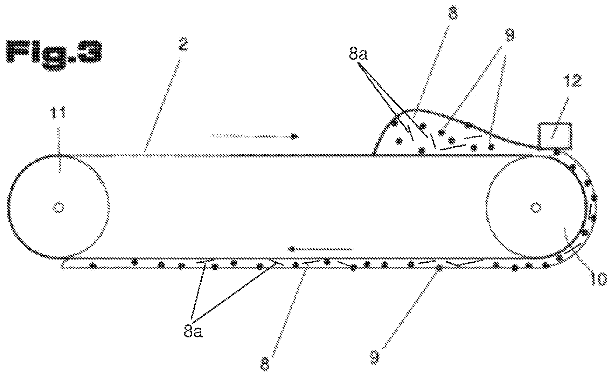

Zur Herstellung des erfindungsgemäßen Endlosbandes 1 wird gemäß Fig. 3 das Grundmaterial 8 bevorzugt direkt auf die erste Hauptoberfläche 3 des Bandkörpers 2 aufgebracht. Das Grundmaterial 8 kann hierbei in einer flüssigen, insbesondere dickflüssigen Form, bevorzugt in dickflüssiger Form mit einer dynamischen Viskosität von 10² - 10⁵ mPas, insbesondere 10⁴ - 10⁵ mPas auf die erste Hauptoberfläche 3 des Bandkörpers 2 aufgebracht werden. Die Bewährungselemente 8a können in das Grundmaterial 8 eingebracht werden, bevor dieses auf die erste Hauptoberfläche 3 des Bandkörpers 2 aufgebracht wird. So können beispielsweise Fasern oder kleine Metallstäbe, insbesondere in Form von Nadeln, dem Grundmaterial 8 zugemischt werden. Hierbei können die Bewährungselemente 8a statistisch in dem Grundmaterial 8 bzw. in der Beschichtung 7 verteilt sein. Alternativ können die (faser- und/oder stab- und/oder nadelförmigen) Bewährungselemente 8a auch vor dem Aufbringen des Grundmaterials 8 auf dem Bandkörper 2 verteilt und danach mit dem Grundmaterial 8 beschichtet werden.

Gemäß einer anderen Variante der Erfindung können die Bewährungselemente 8a eine Fernordnung aufweisen und beispielsweise in Form eines Netzes, Gitters oder Gewebes, wie beispielsweise eines Armierungsgewebes, vorliegen. In diesem Fall können die Bewährungselemente 8a ebenfalls auch bereits vor dem Auftragen des Grundmaterials 8 auf die erste Hauptoberfläche 3 des Bandkörpers 2 aufgelegt und sodann mit dem Grundmaterial 8 bedeckt werden. Somit kann das Gitter, Netz oder Gewebe auch zuerst auf das Band aufgetragen werden und erst danach das Grundmaterial darüber aufgetragen werden. Die besagte Auftragung des Gitters, Netzes oder Gewebes auf das Endlosband 1 kann dabei z.B. auch "spiralförmig" (genau genommen: schraubenlinienförmig) in Umfangsrichtung des Endlosbandes 1 erfolgen.

Somit bildet das Gitter, Netz oder Gewebe eine schraubenförmige Wicklung auf der Hauptoberfläche 3 des Endlosbandes 1. Letzteres hat den Vorteil, dass das Gitter, Gewebe oder Netz keine Stoßstelle in Querrichtung des Endlosbandes 1 besitzt sondern sozusagen "endlos" aufgetragen wird, wobei natürlich sehr wohl Stoßstellen zwischen den einzelnen Bahnabschnitten des Netzes, Gitters oder Gewebes (also in Längsrichtung des Endlosbandes) existieren, diese werden jedoch nicht so belastet wie es bei Stoßstellen in Querrichtung des Endlosbandes 1 der Fall wäre. Bei der soeben beschriebenen Ausführungsform ist die Breite des Gitters Gewebes oder Netzes kleiner als die Breite des Endlosbandes 1.

Auch kann zuerst eine Schicht des Grundmaterials 8 aufgetragen werden und hierauf die Bewährungselemente 8a in das Grundmaterial 8 eingelegt und sodann von einer weiteren Schicht des Grundmaterials 8 vollständig bedeckt werden. Zudem kann auch bei Verwendung von Bewährungselementen 8a, die ein Gitter oder Netz bilden, ein gemeinsames Auftragen mit dem Grundmaterial 8 erfolgen. So kann das Gitter oder Netz mit dem Grundmaterial 8 getränkt werden und gemeinsam mit dem Grundmaterial 8 auf die Bandoberfläche 2 aufgebracht werden.

Bei der Verwendung von keine Fernordnung bildenden Bewährungselementen 8a z.B. Glasfaserschnitzel, werden die Bewährungselemente 8a bevorzugt gemeinsam mit den Hartpartikeln 9 in das Grundmaterial 8 eingebracht bzw. mit diesem vermischt und danach wird das Grundmaterial 8 mit den darin enthaltenen Bewährungselementen 8a und den und den Hartpartikeln 9 z.B. aufgerakelt - die Bewährungselemente 8a und die Hartpartikel 9 sind sodann statistisch in der Beschichtung verteilt.

Hingegen wird bei Verwendung von Netzen/Gittern/Geweben, sprich Bewährungselementen 8a mit Fernordnung, diese bevorzugt zuerst auf das Endlosband 1 aufgelegt/aufgebracht/aufgeklebt und im Anschluss wird das Grundmaterial 8a bestehend aus Matrix und Hartpartikel 9 aufgebracht, insbesondere aufgerakelt.

Bevorzugt beträgt die zugemischte Masse der Bewährungselemente 8a zwischen 10 und 45 Gewichtsprozent, insbesondere zwischen 20 und 35 Gewichtsprozent, des Grundmaterials 8 oder der Beschichtung 7.

Die Struktur der Bewährungselemente 8a ist in der fertigen Beschichtung 7 durch Unebenheiten erkennbar.

Gemäß einer bevorzugten Variante der Erfindung werden auch die Hartpartikel 9 bereits vor einem Auftragen des Grundmaterials 8 auf den Bandkörper 2 in das Grundmaterial 8 eingemischt. Alternativ kann aber das Grundmaterial 8 mit oder ohne Bewährungselementen 8a zuerst auf den Bandkörper 2 aufgebracht werden und dann die Hartpartikel 9 in dem bereits aufgebrachten Grundmaterial 8 verteilt werden. So können die Hartpartikel 9 beispielsweise in das noch feuchte Grundmaterial 8 eingestreut werden. Die Hartpartikel 9 können in der aus dem Grundmaterial 8 gebildeten Matrix statistisch verteilt sein.

Das Grundmaterial 8, die Bewährungselemente 8a und die Hartpartikel 9 können mittels einer Rakel 12, beispielsweise mittels einer leistenförmigen Rakel, gleichmäßig auf der ersten Hauptoberfläche 3 des Bandkörpers 2 verteilt werden.

Alternativ oder zusätzlich zur Verwendung einer Rakel, können das Grundmaterial 8, die Bewährungselemente 8a und/oder die Hartpartikel 9 auch durch Aufwalzen, Aufspachteln, Aufpinseln, (Auf-)Extrudieren oder Aufsprühen auf die Oberfläche des Bandkörpers 2 aufgebracht und verteilt werden. Auch eine Beschichtung des Bandkörpers 2 mit dem Grundmaterial 8 und den Hartpartikel 9 mittels eines Curtain Coating Verfahrens ist möglich.

Wie aus Fig. 3 weiters ersichtlich ist wird der Bandkörper 2 vor einem Aufbringen der Beschitung 7 zu einem endlosen Ring geschlossen. Da der Bandkörper 2 aus Metall hergestellt ist, wird dieser durch Verschweißen zu dem Ring geschlossen Der zu einem endlosen Ring geschlossene Bandkörper 2 wird vor Aufbringen der Beschichtung 7 zwischen zwei Rollen 10, 11 umlaufend angeordnet.

Das Grundmaterial 8, die Bewährungselemente 8a und/oder die Hartpartikel 9 werden auf ein Obertrum des zu einem geschlossenen Ring geformten Bandkörpers 2 aufgebracht und beispielsweise mit der Rakel 12 gleichmäßig auf dem Obertrum verteilt. Der Bandkörper 2 wird während oder nach dem Verteilen des Grundmaterials 8 sowie der Bewährungselemente 8a und der Hartpartikeln 9 in einer Umlaufrichtung weiterbewegt. Nach einem Trocknen des Grundmaterials 8 sind die Bewährungselemente 8a und die Hartpartikel 9 fest in dieses eingebettet und die aus dem getrockneten Grundmaterial 8 und den Hartpartikeln 9 gebildete Beschichtung 7 unlösbar mit der ersten Hauptoberfläche 3 des Bandkörpers 2 des Endlosbandes 1 verbunden.

Die Beschichtung 7 kann in einer einzigen Bahn auf den geschlossenen Bandkörper 2 aufgebracht werden, oder aber auch in mehreren Bahnen. Zwischen den Bahnen kann sich ein nicht beschichteter Spalt befinden. Bevorzugt wird der Bandkörper 2 nicht bis zum Rand beschichtet, um eine Steuerung der Bandbewegung mit einem Bandkantensensor zu ermöglichen. Im Falle mehrerer Bahnen können diese eine unterschiedliche Breite aufweisen. Die Bahnen können aber auch eine unterschiedliche Beschichtungen 7 hinsichtlich der Zusammensetzung der Matrix, der Bewährungselemente 8a und der Hartpartikel 9 aufweisen.

Bei Bedarf könnte noch eine Nachbehandlung im Nassen oder auch im trockenen Zustand der Beschichtung 7 erfolgen, beispielsweise durch Schleifen, Kratzen, Glätten, Polieren, Dressieren, Texturieren. Insbesondere bei Verwendung eines thermoplastischen Kunststoffes als Grundmaterial 8 für die Matrix kann zur Veränderung der Oberfläche nach dem Trocknen der Beschichtung 7 eine nachträgliche Wärmebehandlung erfolgen. Eine derartige Wärmebehandlung kann die gesamte Oberfläche einschließen, sodass die Beschichtungseigenschaften global verändert werden - z.B. können die Textur, die Homogenität oder Eigenspannungen etc. der Beschichtung 7 verändert werden. Bei Bedarf kann ein Wärmeeintrag auch nur lokal erfolgen, um etwaige lokale Strukturierungen, insbesondere bei einer thermoplastischen Matrix, einzubringen.

Insbesondere besteht die Möglichkeit die Beschichtung 7 auch mehrschichtig aufzubringen bzw. örtlich nachzubessern.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Endlosband
- 2: Bandkörper
- 3: Hauptoberfläche
- 4: Hauptoberfläche
- 5: Seitenkante
- 6: Seitenkante
- 7: Beschichtung
- 8: Grundmaterial
- 8a: Bewährungselemente
- 9: Hartpartikel
- 10: Rolle
- 11: Rolle
- 12: Rakel

## Patentansprüche

1. Verfahren zur Herstellung eines Endlosbandes (1) mit einem Bandkörper (2), der eine erste Hauptoberfläche (3) und eine zweite Hauptoberfläche (4) aufweist, wobei die erste Hauptoberfläche (3) und die zweite Hauptoberfläche (4) des Bandkörpers über Seitenkanten (5, 6) miteinander verbunden sind, wobei auf die erste, in einem fertiggestellten Zustand des Endlosbandes (1) einer Innenseite des Endlosbandes (1) gegenüberliegende Hauptoberfläche (3) des Bandkörpers (2) eine Beschichtung (7) aufgebracht wird, wobei die Beschichtung (7) in einem fertiggestellten Zustand eine Außenseite des Endlosbandes (1) bildet, wobei der Bandkörper (2) aus Metall hergestellt ist, wobei der Bandkörper (2) vor einem Aufbringen der Beschichtung (7) durch Verschweißen, zu einem endlosen Ring geschlossen wird, **dadurch gekennzeichnet, dass** als Beschichtung (7) auf die erste Hauptoberfläche (3) des Bandkörpers (2) zumindest ein Grundmaterial (8) aufgebracht wird, in welches Bewährungselemente (8a) eingebracht werden, wobei das Grundmaterial (8) eine Matrix für Hartpartikel (9) bildet, in welche die Hartpartikel (9), die insbesondere aus zumindest einem Material mit einer Härte gemessen nach Vickers von über 500 [HV], bevorzugt mit einer Härte zwischen 1400 [HV] und 10060 [HV] bestehen, eingebettet werden, wobei die Beschichtung (6) direkt auf die erste Hauptoberfläche (3) des Bandkörpers (2) aufgebracht wird, wobei das Grundmaterial (8) aus zumindest einem Polymer oder einer Mischung von Polymeren, insbesondere ausgewählt aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK) Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT) , Polyethylenterephthalat (PET), Polyamid (PA), Polycarbonat (PC), Cycloolefincopolymere (COC), Polyoximethylen (POM), Acrylnitril-butadien-styrol (ABS), Polyvinylcarbonat (PVC), Ethylentetrafluorethylen (ETFE), Polytetrafluorethylen (PTFE), Polyvinylfluorid (PVF), Polyvinylidenfluorid (PVDF) und/oder Ethylen-Tetrafluorethylen-Hexafluorpropylen-Fluorterpolymer (EFEP), bevorzugt einem thermoplastischen Polymer hergestellt wird, wobei das Grundmaterial (8) in einer flüssigen, insbesondere dickflüssigen Form, bevorzugt in dickflüssiger Form mit einer dynamischen Viskosität von 10² - 10⁵ mPas, insbesondere 10⁴ - 10⁵ mPas, bevorzugt gemeinsam mit den Bewährungselementen (8a) und den Hartpartikeln (9), auf die erste Hauptoberfläche (3) des Bandkörpers (2) aufgebracht und, insbesondere mittels einer Rakel (12), bevorzugt mittels einer leistenförmigen Rakel, gleichmäßig auf der ersten Hauptoberfläche (3) des Bandkörpers (2) verteilt wird, wobei der zu einem endlosen Ring geschlossene Bandkörper (2) vor Aufbringen der Beschichtung (7) zwischen zwei Rollen (10, 11) umlaufend angeordnet wird, wobei das Grundmaterial (8) und die Bewährungselemente (8a) sowie die Hartpartikel (9) auf ein Obertrum des zu einem geschlossenen Ring geformten Bandkörpers (2) aufgebracht und, insbesondere mit der Rakel (12), gleichmäßig auf dem Obertrum verteilt wird, wobei der Bandkörper (2) während oder nach dem Verteilen des Grundmaterials (8) und der Hartpartikeln (9) in einer Umlaufrichtung weiterbewegt wird.

2. Verfahren nach Anspruch 1, **dadurch gekennzeichnet, dass** als Bewährungselemente (8a) Fasern, insbesondere mineralische Fasern, wie Kohlenstofffasern und/oder Borfasern und/oder Glasfasern, und/oder Kunststofffasern, wie Nylonfasern (z.B. Polyamid), und/oder Metallfasern und/oder Fasern auf Basis von natürlichen Rohstoffen, wie Zellulose und/oder Hanf und/oder Baumwolle und/oder Sisal und/oder Jute und/oder Flachs und/oder Naturfasern und/oder Holzfasern und/oder Wolle und/oder Tierhaare und/oder Seide, und/oder Nadeln, insbesondere Metallnadeln, verwendet werden.

3. Verfahren nach Anspruch 1 oder 2, **dadurch gekennzeichnet, dass** die Bewährungselemente (8a) zumindest eine Fernordnung, beispielsweise in Form eines Netzes, Gitters oder Gewebes, insbesondere in Form eines Biaxial-Glasgewebes, Glasfasergeleges, Kohlefasergeleges, bilden oder statistisch in dem Grundmaterial, beispielsweise in Form von Baumwollflocken, Glasfaserschnitzel, Kohlefaserschnitzel, verteilt werden.,

4. Verfahren nach einem der Ansprüche 1 bis 3, **dadurch gekennzeichnet, dass** die Bewährungselemente (8a) je ein Verhältnis von Länge zu Durchmesser von mindestens 3:1, insbesondere von mindestens 5:1, bevorzugt von mindestens 7:1, besonders bevorzugt von mindestens 8:1 aufweisen.

5. Verfahren nach einem der Ansprüche 1 bis 4, **dadurch gekennzeichnet, dass** ein Anteil der Bewährungselemente (8a) zwischen 10 und 45 Gewichtsprozent, insbesondere zwischen 20 und 35 Gewichtsprozent, des Grundmaterials (8) oder der Beschichtung (7) beträgt.

6. Verfahren nach einem der Ansprüche 1 bis 6 , **dadurch gekennzeichnet, dass** als Hartpartikel (9) organische Partikel, insbesondere Weizengrieß, Partikel aus Nussschalen, Reis oder Partikel aus gebrochenen Kirschenkernen, und/oder anorganische Partikel, insbesondere ausgewählt aus der Gruppe, Korund (Al2O3), Rubin, Saphir, Quarz (Si02), Topas (Al2[(F,OH)2|SiO4]), Siliciumcarbid (SiC), Diamant (C), Bornitrid (BN), Aggregierte Diamant-Nanostäbchen (ADNR), ZrO2, Dotierungen von ZrO2, insbesondere 8YSZ und 3 YSZ, Sand, TiO2, Metall- oder Keramikpulver und anorganische Agglomerate, verwendet werden.

7. Verfahren nach einem der Ansprüche 1 bis 11, **dadurch gekennzeichnet, dass** die Hartpartikel (9) und die Bewährungselemente (8a) in das die Matrix für die Hartpartikel (9) bildende Grundmaterial (8) vor einem Auftragen auf die erste Hauptoberfläche (3) des Bandkörpers (2) eingemischt werden.

8. Verfahren nach einem der Ansprüche 1 bis 12, **dadurch gekennzeichnet, dass** das Grundmaterial (8), insbesondere das Grundmaterial (8) mit den Bewährungselementen (8a) und die Hartpartikel (9) auf die erste Hauptoberfläche (3) aufgesprüht, aufgepinselt, aufgewalzt und/oder aufgespachtelt werden.

9. Verfahren nach einem der Ansprüche 1 bis 13, **dadurch gekennzeichnet, dass** die Hartpartikel (9) eine Korngröße zwischen 0,01 und 3 mm, bevorzugt zwischen 0,05 bis 2 mm, besonders bevorzugt zwischen 0,1 bis 1 mm aufweisen.

10. Endlosband hergestellt nach einem der Ansprüche 1 bis 9, mit einem Bandkörper (2), der eine erste Hauptoberfläche (3) und eine zweite Hauptoberfläche (4) aufweist, wobei die erste Hauptoberfläche (3) und die zweite Hauptoberfläche (4) des Bandkörpers (2) über Seitenkanten (5, 6) miteinander verbunden sind, wobei auf die erste, einer Innenseite des Endlosbandes (1) gegenüberliegende Hauptoberfläche (3) des Bandkörpers (2) eine Beschichtung (7) aufgebracht ist, wobei die Beschichtung (7) eine Außenseite des Endlosbandes (1) bildet, wobei der Bandkörper (2) aus Metall, insbesondere aus Stahl gefertigt ist, **dadurch gekennzeichnet, dass** die Beschichtung (7) ein Grundmaterial (8), in welches Bewährungselemente (8a) eingebracht sind aufweist, wobei das Grundmaterial (8) eine Matrix bildet, in welche Hartpartikel (9), aus zumindest einem Material mit einer Härte gemessen nach Vickers von über 500 [HV], bevorzugt mit einer Härte zwischen 1400 [HV] und 10060 [HV], eingebettet sind, wobei die Beschichtung (7) direkt auf der ersten Hauptoberfläche (3) des Bandkörpers (2) aufgebracht ist, wobei das Grundmaterial (8) aus zumindest einem Polymer oder einer Mischung von Polymeren, insbesondere ausgewählt aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK) Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT) , Polyethylenterephthalat (PET), Polyamid (PA), Polycarbonat (PC), Cycloolefincopolymere (COC), Polyoximethylen (POM), Acrylnitril-butadien-styrol (ABS), Polyvinylcarbonat (PVC), Ethylentetrafluorethylen (ETFE), Polytetrafluorethylen (PTFE), Polyvinylfluorid (PVF), Polyvinylidenfluorid (PVDF) und/oder Ethylen-Tetrafluorethylen-Hexafluorpropylen-Fluorterpolymer (EFEP), bevorzugt einem thermoplastischen Polymer hergestellt ist.

11. Endlosband nach Anspruch 10, **dadurch gekennzeichnet, dass** die Bewährungselemente (8a) als Fasern, insbesondere mineralische Fasern, wie Kohlenstofffasern und/oder Borfasern und/oder Glasfasern, und/oder Kunststofffasern, wie Nylonfasern (z.B. Polyamid), und/oder Metallfasern und/oder Fasern auf Basis von natürlichen Rohstoffen, wie Zellulose und/oder Hanf und/oder Baumwolle und/oder Sisal und/oder Hanf und/oder Jute und/oder Flachs und/oder Naturfasern und/oder Holzfasern und/oder Wolle und/oder Tierhaare und/oder Seide, und/oder als Nadeln, insbesondere Metallnadeln, ausgebildet sind.

12. Endlosband nach nach Anspruch 10 oder 11, **dadurch gekennzeichnet, dass** die Bewährungselemente (8a) zumindest eine Fernordnung, beispielsweise in Form eines Netzes, Gitters oder Gewebes, insbesondere in Form eines Biaxial-Glasgewebes, Glasfasergeleges, Kohlefasergeleges, bilden oder statistisch in dem Grundmaterial (8) beispielsweise in Form von Baumwollflocken, Glasfaserschnitzel, Kohlefaserschnitzel, verteilt sind.

13. Endlosband nach einem der Ansprüche 10 bis 12, **dadurch gekennzeichnet, dass** die Bewährungselemente (8a) je ein Verhältnis von Länge zu Durchmesser von mindestens 3:1, insbesondere von mindestens 5:1, bevorzugt von mindestens 7:1, besonders bevorzugt von mindestens 8:1 aufweisen.

14. Endlosband nach einem der Ansprüche 10 bis 13, **dadurch gekennzeichnet, dass** die ein Anteil der Bewährungselemente (8a) zwischen 10 und 45 Gewichtsprozent, insbesondere zwischen 20 und 35 Gewichtsprozent, des Grundmaterials (8) oder der Beschichtung (7) beträgt.

15. Endlosband nach einem der Ansprüche 10 bis 14, **dadurch gekennzeichnet, dass** die Hartpartikel (9) organische Partikel, insbesondere Weizengrieß, Partikel aus Nussschalen, Reis oder Partikel aus gebrochenen Kirschenkernen, und/oder anorganische Partikel, insbesondere ausgewählt aus der Gruppe, Korund (Al2O3), Rubin, Saphir, Quarz (Si02), Topas (Al2[(F,OH)2|SiO4]), Siliciumcarbid (SiC), Diamant (C), Bornitrid (BN), Aggregierte Diamant-Nanostäbchen (ADNR), ZrO2, Dotierungen von ZrO2, insbesondere 8YSZ und 3 YSZ, Sand, TiO2, Metall- oder Keramikpulver und anorganische Agglomerate, sind.

16. Endlosband nach einem der Ansprüche 10 bis 15, **dadurch gekennzeichnet, dass** die Hartpartikel (9) eine Korngröße zwischen 0,01 und 3 mm bevorzugt zwischen 0,05 bis 2 mm, besonders bevorzugt zwischen 0,1 bis 1 mm aufweisen.

17. Endlosband nach einem der Ansprüche 10 bis 16, **dadurch gekennzeichnet, dass** eine Oberfläche der Beschichtung (7) 1 bis 10000, bevorzugt 1 bis 1000, besonders bevorzugt 10 bis 1000, Hartpartikel pro cm² aufweist.

18. Endlosband nach einem der Ansprüche 10 bis 17, **dadurch gekennzeichnet, dass** die Beschichtung (7) in einem trockenen und in einem nassen Oberflächenzustand eine Rutschhemmung von R13 gemäß DIN-51130 aufweist.

19. Endlosband nach einem der Ansprüche 10 bis 18, **dadurch gekennzeichnet, dass** die Beschichtung (7) eine Schichtdicke zwischen 0,1 und 5 mm, insbesondere zwischen 0,5 und 1,5 mm aufweist.

20. Endlosband nach einem der Ansprüche 10 bis 19, **dadurch gekennzeichnet, dass** die Beschichtung (7) eine mittlere Rautiefe von mehr als 100 µm, bevorzugt von mehr als 300 µm, besonders bevorzugt von mehr als 500 µm aufweist.

21. Endlosband nach einem der Ansprüche 10 bis 20, **dadurch gekennzeichnet, dass** das Endlosband (1) eine Umfangslänge zwischen 0,2 und 30 m, insbesondere zwischen 1 und 25 m und eine Dicke zwischen 0,1 und 4 mm, insbesondere zwischen 0,2 und 2,5 mm und eine Breite zwischen 0,1 und 10 m, insbesondere zwischen 0,2 und 3,2 m, aufweist.

22. Endlosband nach einem der Ansprüche 10 bis 21, **dadurch gekennzeichnet, dass** die Beschichtung (7) stoßfrei ist.

## Claims

1. A method for producing an endless belt (1) having a belt body (2), which comprises a first main surface (3) and a second main surface (4), wherein the first main surface (3) and the second main surface (4) of the belt body are connected to one another via lateral edges (5, 6), wherein a coating (7) is applied to the first main surface (3) of the belt body (2) being opposite to an inner side of the endless belt (1) in a finished state of the endless belt (1), wherein the coating (7) forms an outer side of the endless belt (1) in a finished state, wherein the belt body (2) is made of metal, wherein the belt body (2) is closed by welding to form an endless ring before the coating (7) is applied, **characterized in that** at least one base material (8), into which reinforcing elements (8a) are inserted, is applied to the first main surface (3) of the belt body (2) as the coating (7), wherein the base material (8) forms a matrix for hard particles (9), into which the hard particles (9), which consist in particular of at least one material with a hardness measured according to Vickers of more than 500 [HV], preferably with a hardness between 1400 [HV] and 10060 [HV], are embedded, wherein the coating (6) is applied directly to the first main surface (3) of the belt body (2), wherein the base material (8) is made of at least one polymer or a mixture of polymers, in particular selected from the group of polyimide (PI), polypropylene (PP), monoaxially oriented polypropylene (MOPP), biaxially oriented polypropylene (BOPP), polyethylene (PE), polyphenylene sulfide (PPS), polyetheretherketone (PEEK) polyetherketone (PEK), polyethyleneimide (PEI), polysulfone (PSU), Polyaryletherketone (PAEK), Polyethylene naphthalate (PEN), Liquid crystalline polymers (LCP), Polyester, Polybutylene terephthalate (PBT), Polyethylene terephthalate (PET), Polyamide (PA), Polycarbonate (PC), Cycloolefin copolymers (COC), Polyoxymethylene (POM), Acrylonitrile-butadiene-styrene (ABS), polyvinyl carbonate (PVC), ethylene tetrafluoroethylene (ETFE), polytetrafluoroethylene (PTFE), polyvinyl fluoride (PVF), polyvinylidene fluoride (PVDF) and/or ethylene-tetrafluoroethylene-hexafluoropropylene-fluoropolymer (EFEP), preferably a thermoplastic polymer, wherein the base material (8) is applied in a liquid, in particular viscous form, preferably in viscous form with a dynamic viscosity of 10² - 10⁵ mPas, in particular 10⁴ - 10⁵ mPas, preferably together with the reinforcing elements (8a) and the hard particles (9), to the first main surface (3) of the belt body (2) and is distributed uniformly on the first main surface (3) of the belt body (2), in particular by means of a doctor blade (12), preferably by means of a strip-shaped doctor blade, wherein the belt body (2), which is closed to form an endless ring, is circumferentially arranged between two rollers (10, 11) before the coating (7) is applied, wherein the base material (8) and the reinforcing elements (8a) as well as the hard particles (9) are applied to an upper run of the belt body (2) formed into a closed ring and distributed uniformly on the upper run, in particular by means of the doctor blade (12), wherein the belt body (2) is moved further in a circumferential direction during or after the distribution of the base material (8) and the hard particles (9).

2. The method according to claim 1, **characterized in that** fibers, in particular mineral fibers, such as carbon fibers and/or boron fibers, and/or glass fibers and/or plastic fibers, such as nylon fibers (e.g. polyamide), and/or metal fibers and/or fibers based on natural raw materials, such as cellulose and/or hemp and/or cotton and/or sisal and/or jute and/or flax and/or natural fibers and/or wood fibers and/or wool and/or animal hair and/or silk, and/or as needles, in particular metal needles, are used as reinforcing elements (8a).

3. The method according to claim 1 or 2, **characterized in that** the reinforcing elements (8a) form at least a long-range order, for example in the form of a mesh, grid or fabric, in particular in the form of a biaxial glass fabric, a glass fiber scrim, a carbon fiber scrim, or may be statistically distributed in the base material, for example in the form of cotton flocks, glass fiber shavings, carbon fiber shavings.

4. The method according to one of claims 1 to 3, **characterized in that** the reinforcing elements (8a) may each have a ratio of length to diameter of at least 3:1, in particular of at least 5:1, preferably of at least 7:1, particularly preferred of at least 8:1.

5. The method according to one of claims 1 to 4, **characterized in that** a share of the reinforcing elements (8a) amounts to between 10 and 45 percent by weight, in particular between 20 and 35 percent by weight, of the base material (8) or the coating (7).

6. The method according to one of claims 1 to 6, **characterized in that** organic particles, in particular wheat grit, particles from nut shells, rice or particles from broken cherry stones, and/or inorganic particles, in particular selected from the group, corundum (Al2O3), ruby, sapphire, quartz (SiO2), topaz (Al2[(F,OH)2|SiO4]), silicon carbide (SiC), diamond (C), boron nitride (BN), aggregated diamond nanorods (ADNR), ZrO2, dopants of ZrO2, in particular 8YSZ and 3 YSZ, sand, TiO2, metal or ceramic powders and inorganic agglomerates, are used as the hard particles (9).

7. The method according to one of claims 1 to 11, **characterized in that** the hard particles (9) and the reinforcing elements (8a) are mixed into the base material (8) forming the matrix for the hard particles (9) prior to application to the first main surface (3) of the belt body (2).

8. The method according to one of claims 1 to 12, **characterized in that** the base material (8), in particular the base material (8) with the reinforcing elements (8a) and the hard particles (9) are sprayed, brushed, rolled and/or trowelled onto the first main surface (3).

9. The method according to one of claims 1 to 13, **characterized in that** the hard particles (9) have a grain size of between 0.01 and 3 mm, preferably between 0.05 to 2 mm, particularly preferred between 0.1 and 1 mm.

10. An endless belt produced according to one of claims 1 to 9, having a belt body (2), which comprises a first main surface (3) and a second main surface (4), wherein the first main surface (3) and the second main surface (4) of the belt body (2) are connected to one another via lateral edges (5, 6), wherein a coating (7) is applied to the first main surface (3) of the belt body (2) being opposite to an inner side of the endless belt (1), wherein the coating (7) forms an outer side of the endless belt (1), wherein the belt body (2) is made of metal, in particular of steel, **characterized in that** the coating (7) has a base material (8) into which reinforcing elements (8a) are inserted, wherein the base material (8) forms a matrix, into which hard particles (9) of at least one material with a hardness measured according to Vickers of more than 500 [HV], preferably with a hardness between 1400 [HV] and 10060 [HV], are embedded, wherein the coating (7) is applied directly to the first main surface (3) of the belt body (2), wherein the base material (8) is made of at least one polymer or a mixture of polymers, in particular selected from the group of polyimide (PI), polypropylene (PP), monoaxially oriented polypropylene (MOPP), biaxially oriented polypropylene (BOPP), polyethylene (PE), polyphenylene sulfide (PPS), polyetheretherketone (PEEK) polyetherketone (PEK), polyethyleneimide (PEI), polysulfone (PSU), Polyaryletherketone (PAEK), Polyethylene naphthalate (PEN), Liquid crystalline polymers (LCP), Polyester, Polybutylene terephthalate (PBT), Polyethylene terephthalate (PET), Polyamide (PA), Polycarbonate (PC), Cycloolefin copolymers (COC), Polyoxymethylene (POM), Acrylonitrile-butadiene-styrene (ABS), polyvinyl carbonate (PVC), ethylene tetrafluoroethylene (ETFE), polytetrafluoroethylene (PTFE), polyvinyl fluoride (PVF), polyvinylidene fluoride (PVDF) and/or ethylene-tetrafluoroethylene-hexafluoropropylene-fluoropolymer (EFEP), preferably a thermoplastic polymer.

11. The endless belt according to claim 10, **characterized in that** the reinforcing elements (8a) are designed as fibers, in particular mineral fibers, such as carbon fibers and/or boron fibers, and/or glass fibers and/or plastic fibers, such as nylon fibers (e.g. polyamide), and/or metal fibers and/or fibers based on natural raw materials, such as cellulose and/or hemp and/or cotton and/or sisal and/or hemp and/or jute and/or flax and/or natural fibers and/or wood fibers and/or wool and/or animal hair and/or silk, and/or as needles, in particular metal needles.

12. The endless belt according to claim 10 or 11, **characterized in that** the reinforcing elements (8a) form at least a long-range order, for example in the form of a mesh, grid or fabric, in particular in the form of a biaxial glass fabric, a glass fiber scrim, a carbon fiber scrim, or may be statistically distributed in the base material (8), for example in the form of cotton flocks, glass fiber shavings, carbon fiber shavings.

13. The endless belt according to one of claims 10 to 12, **characterized in that** the reinforcing elements (8a) may each have a ratio of length to diameter of at least 3:1, in particular of at least 5:1, preferably of at least 7:1, particularly preferred of at least 8:1.

14. The endless belt according to one of claims 10 to 13, **characterized in that** a share of the reinforcing elements (8a) amounts to between 10 and 45 percent by weight, in particular between 20 and 35 percent by weight, of the base material (8) or the coating (7).

15. The endless belt according to one of claims 10 to 14, **characterized in that** the hard particles (9) are organic particles, in particular wheat grit, particles from nut shells, rice or particles from broken cherry stones, and/or inorganic particles, in particular selected from the group, corundum (Al2O3), ruby, sapphire, quartz (SiO2), topaz (Al2[(F,OH)2|SiO4]), silicon carbide (SiC), diamond (C), boron nitride (BN), aggregated diamond nanorods (ADNR), ZrO2, dopants of ZrO2, in particular 8YSZ and 3 YSZ, sand, TiO2, metal or ceramic powders and inorganic agglomerates.

16. The endless belt according to one of claims 10 to 15, **characterized in that** the hard particles (9) have a grain size of between 0.01 and 3 mm, preferably between 0.05 to 2 mm, particularly preferred between 0.1 and 1 mm.

17. The endless belt according to one of claims 10 to 16, **characterized in that** a surface of the coating (7) comprises 1 to 10000, preferably 1 to 1000, particularly preferred 10 to 1000, hard particles per cm².

18. The endless belt according to one of claims 10 to 17, **characterized in that** the coating (7) has a slip resistance of R13 according to DIN-51130 in a dry and in a wet surface condition.

19. The endless belt according to one of claims 10 to 18, **characterized in that** the coating (7) has a layer thickness of between 0.1 and 5 mm, in particular of between 0.5 and 1.5 mm.

20. The endless belt according to one of claims 10 to 19, **characterized in that** the coating (7) has an average roughness depth of more than 100 µm, preferably of more than 300 µm, particularly preferred of more than 500 µm.

21. The endless belt according to one of claims 10 to 20, **characterized in that** the endless belt (1) has a circumferential length of between 0.2 and 30 m, in particular between 1 and 25 m and a thickness of between 0.1 and 4 mm, in particular between 0.2 and 2.5 mm and a width of between 0.1 and 10 m, in particular between 0.2 and 3.2 m.

22. The endless belt according to one of claims 10 to 21, **characterized in that** the coating (7) is seamless.

## Revendications

1. Procédé de fabrication d'une bande sans fin (1) avec un corps de bande (2) qui comprend une première surface principale (3) et une seconde surface principale (4), dans lequel la première surface principale (3) et la seconde surface principale (4) du corps de bande sont reliées par des bords latéraux (5, 6), dans lequel un revêtement (7) est appliqué sur la première surface principale (3) du corps de bande (2) opposée à une face intérieure de la bande sans fin (1) dans un état fini de la bande sans fin (1), dans lequel le revêtement (7) forme une face extérieure de la bande sans fin (1) dans un état fini, dans lequel le corps de bande (2) est fabriqué en métal, dans lequel le corps de bande (2) est fermé par soudage en un anneau sans fin avant l'application du revêtement (7), **caractérisé en ce qu'**au moins un matériau de base (8) au sein duquel sont introduits des éléments de préservation (8a) est appliqué comme revêtement (7) sur la première surface principale (3) du corps de bande (2), dans lequel le matériau de base (8) forme une matrice pour des particules dures (9) au sein de laquelle sont intégrées des particules dures (9) en particulier constituées d'au moins un matériau d'une dureté mesurée selon Vickers supérieure à 500 [HV], de manière préférée d'une dureté comprise entre 1400 [HV]] et 10060 [HV], dans lequel le revêtement (6) est appliqué directement sur la première surface principale (3) du corps de bande (2), dans lequel le matériau de base (8) est fabriqué à partir d'au moins un polymère ou d'un mélange de polymères, en particulier choisi dans le groupe du polyimide (PI), du polypropylène (PP), du polypropylène à orientation monoaxiale (MOPP), du polypropylène à orientation biaxiale (BOPP), du polyéthylène (PE), du sulfure de polyphénylène (PPS), du polyétheréthercétone (PEEK), du polyéthercétone (PEK), du polyéthylèneimide (PEI), du polysulfone (PSU), du polyaryléthercétone (PAEK), du naphtalate de polyéthylène (PEN), des polymères à cristaux liquides (LCP), du polyester, du téréphtalate de polybutylène (PBT), du téréphtalate de polyéthylène (PET), du polyamide (PA), du polycarbonate (PC), du copolymère de cyclooléfine (COC), du polyoxyméthylène (POM), de l'acrylonitrile-butadiène-styrène (ABS), du polyvinylcarbonate (PVC), de l'éthylène-tétrafluoroéthylène (ETFE), du polytétrafluoroéthylène (PTFE), du polyfluorure de vinyle (PVF), du polyfluorure de vinylidène (PVDF) et/ou de l'éthylène-tétrafluoroéthylène-hexafluoropropylène-fluoropolymère (EFEP), de manière préférée un polymère thermoplastique, dans lequel le matériau de base (8) est produit sous une forme liquide, en particulier épaisse, de manière préférée sous une forme épaisse avec une viscosité dynamique comprise entre 10² et 10⁵ mPas, en particulier comprise entre 10^{4 et} 10⁵ mPas, de manière préférée conjointement avec les éléments de préservation (8a) et les particules dures (9), est appliqué sur la première surface principale (3) du corps de bande (2) et est réparti uniformément sur la première surface principale (3) du corps de bande (2), en particulier au moyen d'une racle (12), de manière préférée au moyen d'une racle en forme de lame, dans lequel le corps de bande (2) fermé en un anneau sans fin est agencé de manière circonférentielle entre deux rouleaux (10, 11) avant l'application du revêtement (7), dans lequel le matériau de base (8) et les éléments de préservation (8a) ainsi que les particules dures (9) sont appliqués sur un brin supérieur du corps de bande (2) formé en un anneau fermé et sont répartis de manière uniforme sur le brin supérieur en particulier avec la racle (12), dans lequel le corps de bande (2) continue à se déplacer dans une direction circonférentielle pendant ou après la répartition du matériau de base (8) et des particules dures (9).

2. Procédé selon la revendication 1, **caractérisé en ce que** des fibres, en particulier des fibres minérales, telles que des fibres de carbone et/ou des fibres de bore et/ou des fibres de verre, et/ou des fibres synthétiques, telles que des fibres de nylon (p. ex. polyamide), et/ou des fibres métalliques et/ou des fibres à base de matières premières naturelles, telles que de la cellulose et/ou du chanvre et/ou du coton et/ou du sisal et/ou du jute et/ou du lin et/ou des fibres naturelles et/ou des fibres de bois et/ou de la laine et/ou des poils d'animaux et/ou de la soie, et/ou des aiguilles, en particulier des aiguilles métalliques, sont utilisées comme éléments de préservation (8a).

3. Procédé selon la revendication 1 ou 2, **caractérisé en ce que** les éléments de préservation (8a) forment au moins un ordre à grande distance, par exemple sous la forme d'un filet, d'une grille ou d'un tissu, en particulier sous la forme d'un tissu de verre biaxial, d'une couche de fibre de verre, d'une couche de fibre de carbone, ou sont répartis de manière statistique au sein du matériau de base, par exemple sous la forme de flocons de coton, de copeaux de fibre de verre, de copeaux de fibre de carbone.

4. Procédé selon l'une quelconque des revendications 1 à 3, **caractérisé en ce que** les éléments de préservation (8a) présentent respectivement un rapport longueur sur diamètre d'au moins 3:1, en particulier d'au moins 5:1, de manière préférée d'au moins 7:1, de manière particulièrement préférée d'au moins 8:1.

5. Procédé selon l'une quelconque des revendications 1 à 4, **caractérisé en ce que** la proportion des éléments de préservation (8a) est comprise entre 10 et 45 % en poids, en particulier entre 20 et 35 % en poids, du matériau de base (8) ou du revêtement (7).

6. Procédé selon la revendication 1 ou 2, **caractérisé en ce que** des particules organiques, en particulier de la semoule de blé, des particules de coques de noix, du riz ou des particules de noyaux de cerises brisés et/ou des particules inorganiques, en particulier choisies dans le groupe du corindon (Al2O3), du rubis, du saphir, du quartz (SiO2), de la topaze (Al2[F,OH)2|SiO4]), du carbure de silicium (SiC), du diamant (C), du nitrure de bore (BN), des nanobâtonnets de diamant agrégés (ADNR), du ZrO2, des dopages de ZrO2, en particulier 8YSZ et 3YSZ, du sable, du TiO2, des poudres métalliques ou de céramique et des agglomérats inorganiques, sont utilisées comme particules dures (9).

7. Procédé selon l'une quelconque des revendications 1 à 11, **caractérisé en ce que** les particules dures (9) et les éléments de préservation (8a) sont mélangés dans le matériau de base (8) formant la matrice destinée aux particules dures (9) avant une application sur la première surface principale (3) du corps de bande (2).

8. Procédé selon l'une quelconque des revendications 1 à 12, **caractérisé en ce que** le matériau de base (8), en particulier le matériau de base (8) et les particules dures (9), sont pulvérisés, appliqués par brosse, laminés et/ou enduits sur la première surface principale (3).

9. Procédé selon l'une quelconque des revendications 1 à 13, **caractérisé en ce que** les particules dures (9) présentent une taille de grain comprise entre 0,01 et 3 mm, de manière préférée comprise entre 0,05 et 2 mm, de manière particulièrement préférée comprise entre 0,1 et 1 mm.

10. Bande sans fin fabriquée selon l'une quelconque des revendications 1 à 9, avec un corps de bande (2) qui présente une première surface principale (3) et une seconde surface principale (4), dans laquelle la première surface principale (3) et la seconde surface principale (4) du corps de bande (2) sont reliées l'une à l'autre par des bords latéraux (5, 6), dans lequel un revêtement (7) est appliqué sur la première surface principale (3) du corps de bande (2) opposée à une face intérieure de la bande sans fin (1), dans lequel le revêtement (7) forme une face extérieure de la bande sans fin (1), dans lequel le corps de bande (2) est fabriqué en métal, en particulier en acier, **caractérisée en ce que** le revêtement (7) présente un matériau de base (8) au sein duquel sont insérés des éléments de préservation (8a), dans lequel le matériau de base (8) forme une matrice au sein de laquelle sont intégrées des particules dures (9) constituées d'au moins un matériau d'une dureté mesurée selon Vickers supérieure à 500 [HV], de manière préférée d'une dureté comprise entre 1400 [HV] et 10060 [HV], dans lequel le revêtement (7) est appliqué directement sur la première surface principale (3) du corps de bande (2), dans lequel le matériau de base (8) est fabriqué à partir d'au moins un polymère ou d'un mélange de polymères, en particulier choisi dans le groupe du polyimide (PI), du polypropylène (PP), du polypropylène à orientation monoaxiale (MOPP), du polypropylène à orientation biaxiale (BOPP), du polyéthylène (PE), du sulfure de polyphénylène (PPS), du polyétheréthercétone (PEEK), du polyéthercétone (PEK), du polyéthylèneimide (PEI), du polysulfone (PSU), du polyaryléthercétone (PAEK), du polyéthylène naphtalate (PEN), des polymères à cristaux liquides (LCP), du polyester, du téréphtalate de polybutylène (PBT), du téréphtalate de polyéthylène (PET), du polyamide (PA), du polycarbonate (PC), des copolymères de cyclooléfine (COC), du polyoximéthylène (POM), de l'acrylonitrile-butadiène-styrène (ABS), du polyvinylcarbonate (PVC), de l'éthylène fluorétraéthylène (ETFE), du polytétrafluoroéthylène (PTFE), du polyfluorure de vinyle (PVF), du polyfluorure de vinyle (PVF), du polyfluorure de vinylidène (PVDF) et/ou de l'éthylène-tétrafluoroéthylène-hexafluoropropylène-fluoropolymère (EFEP), de manière préférée un polymère thermoplastique.

11. Bande sans fin selon la revendication 10, **caractérisée en ce que** les éléments de préservation (8a) sont réalisés à partir de fibres, en particulier de fibres minérales, telles que des fibres de carbone et/ou des fibres de bore et/ou des fibres de verre, et/ou de fibres synthétiques, telles que des fibres de nylon (p. ex. polyamide), et/ou de fibres métalliques et/ou de fibres à base de matières premières naturelles, telles que de la cellulose et/ou du chanvre et/ou du coton et/ou du sisal et/ou du jute et/ou du lin et/ou de fibres naturelles et/ou de fibres de bois et/ou de laine et/ou de poils d'animaux et/ou de soie, et/ou d'aiguilles, en particulier des aiguilles métalliques.

12. Bande sans fin selon la revendication 10 ou 11, **caractérisée en ce que** les éléments de préservation (8a) forment au moins un ordre à grande distance, par exemple sous la forme d'un filet, d'une grille ou d'un tissu, en particulier sous la forme d'un tissu de verre biaxial, d'une couche de fibre de verre, d'une couche de fibre de carbone, ou sont répartis de manière statistique au sein du matériau de base, par exemple sous la forme de flocons de coton, de copeaux de fibre de verre, de copeaux de fibre de carbone.

13. Bande sans fin selon l'une quelconque des revendications 10 à 12, **caractérisée en ce que** les éléments de préservation (8a) présentent respectivement un rapport longueur sur diamètre d'au moins 3:1, en particulier d'au moins 5:1, de manière préférée d'au moins 7:1, de manière particulièrement préférée d'au moins 8:1.

14. Bande sans fin selon l'une quelconque des revendications 10 à 13, **caractérisée en ce que** la proportion des éléments de préservation (8a) est comprise entre 10 et 45 % en poids, en particulier entre 20 et 35 % en poids, du matériau de base (8) ou du revêtement (7).

15. Bande sans fin selon l'une quelconque des revendications 10 à 14, **caractérisée en ce que** les particules dures (9) sont des particules organiques, en particulier de la semoule de blé, des particules de coques de noix, du riz ou des particules de noyaux de cerises brisés et/ou des particules inorganiques, en particulier choisies dans le groupe du corindon (Al2O3), du rubis, du saphir, du quartz (SiO2), de la topaze (Al2[F,OH)2|SiO4]), du carbure de silicium (SiC), du diamant (C), du nitrure de bore (BN), des nanobâtonnets de diamant agrégés (ADNR), du ZrO2, des dopages de ZrO2, en particulier 8YSZ et 3YSZ, du sable, du TiO2, des poudres métalliques ou de céramique et des agglomérats inorganiques.

16. Bande sans fin selon l'une quelconque des revendications 10 à 15, **caractérisée en ce que** les particules dures (9) présentent une taille de grain comprise entre 0,01 et 3 mm, de manière préférée comprise entre 0,05 et 2 mm, de manière particulièrement préférée comprise entre 0,1 et 1 mm.

17. Bande sans fin selon l'une quelconque des revendications 10 à 16, **caractérisée en ce que** la surface du revêtement (7) présente entre 1 et 10000, de manière préférée entre 1 et 1000, de manière particulièrement préférée entre 10 et 1000 particules dures par cm².

18. Bande sans fin selon l'une quelconque des revendications 10 à 17, **caractérisée en ce que** le revêtement (7) présente, dans un état de surface sec et dans un état de surface humide, un effet antidérapant R13 selon la norme DIN-51130.

19. Bande sans fin selon l'une quelconque des revendications 10 à 18, **caractérisée en ce que** le revêtement (7) présente une épaisseur de couche comprise entre 0,1 et 5 mm, en particulier comprise entre 0,5 et 1,5 mm.

20. Bande sans fin selon l'une quelconque des revendications 10 à 19, **caractérisée en ce que** le revêtement (7) présente une profondeur de rugosité moyenne supérieure à 100 µm, de manière préférée supérieure à 300 µm, de manière particulièrement préférée supérieure à 500 µm.

21. Bande sans fin selon l'une quelconque des revendications 10 à 20, **caractérisée en ce que** la bande sans fin (1) présente une longueur circonférentielle comprise entre 0,2 et 30 m, en particulier comprise entre 1 et 25 m, et une épaisseur comprise entre 0,1 et 4 mm, en particulier comprise entre 0,2 et 2,5 mm, et une largeur comprise entre 0,1 et 10 m, en particulier comprise entre 0,2 et 3,2 m.

22. Bande sans fin selon l'une quelconque des revendications 10 à 21, **caractérisée en ce que** le revêtement (7) est exempt d'aspérités.
